# EUROPÄISCHE PATENTSCHRIFT

(11) **EP 2 335 884 B1**
(45) Veröffentlichungstag und Bekanntmachung des Hinweises auf die Patenterteilung: **05.09.2012**
(21) Anmeldenummer: 09015514.4
(22) Anmeldetag: 15.12.2009
(51) Int. Cl.: B25J 9/14, B25J 18/06

(54) **Fluidisch betreibbarer Manipulator**
Fluid-operated manipulator
Manipulateur pouvant fonctionner de manière fluidique

(43) Veröffentlichungstag der Anmeldung: 22.06.2011
(73) Patentinhaber: FESTO AG & Co. KG, 73734 Esslingen (DE)
(72) Erfinder: Fischer, Markus, 73728 Esslingen (DE); Kaminski, Ruwen, 70190 Stuttgart (DE); Neumann, Rüdiger, Dr., 73760 Ostfildern (DE); Hildebrandt, Alexander, Dr., 72669 Unterensingen (DE)
(74) Vertreter: Abel, Martin

(56) Entgegenhaltungen:
- WO-A1-01/17731
- WO-A1-96/35877
- DE-B3-102005 046 160
- US-A1- 2003 149 338

## Beschreibung

Die Erfindung betrifft einen fluidisch betreibbaren Manipulator aus mehreren längs einer Erstreckungskurve gestapelt angeordneten Manipulatorsegmenten, die jeweils wenigstens eine Koppelplatte und wenigstens zwei, quer zur Erstreckungskurve beabstandet an der Koppelplatte angeordnete, fluidisch getrennt ausgebildete Fluidkammern umfassen, wobei jede der Fluidkammern wenigstens einen elastisch deformierbaren Wandbereich aufweist, der dazu ausgebildet ist, bei Beaufschlagung der jeweiligen Fluidkammer mit einem Fluid eine Volumenänderung der Fluidkammer für eine Linearbewegung im Wesentlichen parallel zur Erstreckungskurve zu ermöglichen und wobei eine Haupterstreckungsfläche der Koppelplatte für eine Anordnung zumindest im Wesentlichen senkrecht zur Erstreckungskurve vorgesehen ist, wobei die wenigstens zwei Fluidkammern einstückig mit der wenigstens einen Koppelplatte ausgebildet sind. Ein solcher Manipulator ist aus der WO 01/17731 A1 bekannt.

Aus der DE 198 33 340 A1 ist ein wurmförmiger Arbeitsmechanismus bekannt, der verschwenkbar und in seiner Länge einstellbar ist. Der Arbeitsmechanismus umfasst drei Aktoren, die jeweils aus einer Reihe aneinander liegender Taschen oder Kissen bestehen und die mit einem gasförmigen oder flüssigen Druckmedium befüllbar sind. Die aus einem flexiblen, biegeschlaffen Material hergestellten Aktoren sind an formstabilen Stützstrukturen angebracht, die zur Aufrechterhaltung einer Beabstandung der Aktoren dienen und die äußere Form des Arbeitsmechanismus mitbestimmen.

Die WO96/35877 offenbart ein Betätigungsorgan, das aus einer Vielzahl von aneinander gereihten formstabilen Tragelementen und längs der Stapelrichtung der Tragelemente ausgebildeten, aus einem biegeschlaffen Material hergestellten Pumporganen aufgebaut ist. Durch Druckbeaufschlagung wenigstens eines der Pumpelemente mit einem Druckfluid kann eine Krümmung des Betätigungsorgans erzielt werden.

Die Aufgabe der Erfindung besteht darin, einen fluidisch betreibbaren Manipulator bereitzustellen, der eine einfache Aufbauweise aufweist.

Diese Aufgabe wird für einen fluidischen Manipulator der eingangs genannten Art mit den Merkmalen des Kennzeichnenden Teils des Anspruchs 1 gelöst.

Gemäß der Erfindung ist vorgesehen, dass die Manipulatorsegmente mit einem generativen Herstellungsverfahren, insbesondere mittels selektivem Lasersintern, hergestellt sind. Bei einem generativen Herstellungsverfahren handelt es sich um ein Urformverfahren, bei dem die Manipulatorsegmente durch Energieeintrag in eine formlose Masse, beispielsweise ein Reaktionsharz oder ein Kunststoff- oder Metallpulver, unmittelbar und ohne Einsatz von Formwerkzeugen, insbesondere schichtweise, hergestellt werden. Ein solches Verfahren ist beispielsweise das selektive Lasersintern, bei dem ein Laserstrahl eine dünne Pulverschicht durch lokale Verschmelzung zu einer zusammenhängenden Struktur verbindet. Vorteilhaft beim Einsatz von generativen Herstellungsverfahren ist es, dass Änderungen an der Geometrie der Manipulatorsegmente in einfacher Weise durch Änderung des für den Herstellungsvorgang genutzten Datensatzes, beispielsweise CAD-Daten, erfolgen können. Hierdurch wird eine hohe Flexibilität für die anwendungsspezifische Anpassung der Manipulatorsegmente erreicht. Zudem können bei der Verwendung generativer Herstellungsverfahren in einfacher Weise hinterschnittene Geometrien hergestellt werden.

Bei dem Manipulator der Erfindung sind außerdem von den Fluidkammern und der Koppelplatte bestimmte Querschnitte der Manipulatorsegmente in jeweils senkrecht zur Erstreckungskurve ausgerichteten Querschnittsebenen längs der Erstreckungskurve verjüngt ausgebildet sind. Durch eine Verjüngung der aneinander gereihten Manipulatorsegmente längs der Erstreckungskurve wird eine Gewichtsoptimierung für den Manipulator erreicht. Vorzugsweise ist an einem distalen, also von einem Verankerungsort des Manipulators entfernten, Abschnitt des Manipulators, an dem insbesondere ein Werkzeug oder Werkzeughalter angebracht ist, ein geringerer Querschnitt für die Manipulatorsegmente vorgesehen als an einem proximalen, dem Verankerungsort unmittelbar benachbarten Abschnitt des Manipulators. Dies hängt damit zusammen, dass am proximalen Abschnitt zusätzlich zu den vom Manipulator auf ein Werkzeug oder Werkstück zu übertragenden Kräften auch die Gewichtskraft des distalen Abschnitts getragen werden muss.

Durch die einstückige Gestaltung der Fluidkammern mit der Koppelplatte kann ein Kraftfluss zwischen den elastisch deformierbaren Wandbereichen der Fluidkammern und der formstabilen Koppelplatte derart gestaltet werden, dass Spannungsspitzen in den elastisch deformierbaren Wandbereichen vermieden werden, so dass eine Dauerfestigkeit des Manipulators auch nach einer großen Anzahl von Lastspielen sichergestellt ist. Vorzugsweise werden die Deformationseigenschaften der elastisch deformierbaren Wandbereiche einerseits und der formstabilen Koppelplatte andererseits durch die Variation von Materialstärken vorgegeben. Ergänzend können an der formstabilen Koppelplatte auch dreidimensionale Stützstrukturen, insbesondere Fachwerkstrukturen, ausgebildet sein, um bei geringem Gewicht und niedrigem Materialverbrauch eine hohe Steifigkeit zu erreichen. Ein weiterer positiver Effekt der einstückigen Ausführung von Fluidkammern und Koppelplatte ist darin zu sehen, dass eine Abdichtung der Fluidkammern einfach gestaltet werden kann, da insbesondere an einem Übergang zwischen Fluidkammer und Koppelplatte aufgrund der einstückigen Ausführung keine zusätzlichen Dichtmaßnahmen erforderlich sind. Als einstückig werden die Fluidkammern und die Koppelplatte insbesondere dann bezeichnet, wenn sie in einem gemeinsamen Herstellungsprozess aus einem einheitlichen Material hergestellt wurden.

Vorteilhafte Weiterbildungen der Erfindung sind Gegenstand von Unteransprüchen.

Zweckmäßig ist es, wenn, vorzugsweise elastisch deformierbare, Wandbereiche der Fluidkammern für eine, insbesondere einstückige, Verbindung benachbart angeordneter Koppelplatten ausgebildet sind. Damit kommt den Fluidkammern eine Doppelfunktion zu, da sie neben der Bereitstellung einer zumindest im Wesentlichen linearen Ausdehnungsbewegung bei Beaufschlagung mit einem Fluid auch für die mechanische Verbindung benachbarter Koppelplatten dienen. Hierdurch kann auf eine zusätzliche äußere und/oder innere Stützstruktur verzichtet werden, so dass hiermit ein einfacher Aufbau des erfindungsgemäßen Manipulators sichergestellt ist. Vorzugsweise sind die Wandbereiche der Fluidkammern zumindest nahezu vollständig elastisch deformierbar, so dass zumindest ein erheblicher Teil der Fluidkammer bei Druckbeaufschlagung mit einem flüssigen oder gasförmigen Fluid für eine Volumenänderung der Fluidkammer deformiert werden kann. Demgegenüber sind die Koppelplatten derart ausgeführt, dass sie bei einer Druckbeaufschlagung der Fluidkammern keine wesentliche Gestaltveränderung erfahren und somit als formstabil zu bezeichnen sind. Besonders vorteilhaft ist eine einstückige Ausbildung der Fluidkammern mit einander benachbarten Koppelplatten. Hierdurch kann auf aufwendige Dichtmaßnahmen zwischen den Fluidkammern und den Koppelplatten verzichtet werden. Außerdem wird durch die einstückige Ausgestaltung die Kraftübertragung zwischen den Fluidkammern und den Koppelplatten in einfacher Weise sichergestellt.

Vorteilhaft ist es, wenn längs der Erstreckungskurve angeordnete Fluidkammern benachbarter Manipulatorsegmente kommunizierend miteinander verbunden sind. Hierdurch wird in einfacher Weise eine gemeinsame Beaufschlagung mehrerer Fluidkammern mit Druckfluid über eine gemeinsame Zuleitung ermöglicht. Durch die Fluidbeaufschlagung kann eine Volumenänderung der jeweiligen Fluidkammern bewirkt werden, die sich als Ausdehnen oder Zusammenziehen der Fluidkammern äußert und durch die eine Längenänderung der Fluidkammern zumindest im Wesentlichen parallel zur Erstreckungskurve hervorgerufen werden kann.

Bei einer Weiterbildung der Erfindung ist vorgesehen, dass längs der Erstreckungskurve angeordnete Fluidkammern benachbarter Manipulatorsegmente fluidisch getrennt und separat ansteuerbar ausgebildet sind. Mit einer selektiven Ansteuerung der fluidisch getrennten Fluidkammern kann eine besonders feinfühlige Auslenkung des Manipulators erreicht werden. Zudem können einzelne Fluidkammern des Manipulators durch konstante Druckbeaufschlagung auf einer vorgegebenen Volumen- bzw. Längenausdehnung gehalten werden, wodurch der Manipulator beispielsweise ein eine vorgebbare Raumrichtung vorgespannt werden kann.

Vorteilhaft ist es, wenn an einer radial außenliegenden Oberfläche der Koppelplatte wenigstens ein Führungsmittel zur Aufnahme einer Sensorkomponente eines Krümmungssensors ausgebildet ist. Hierdurch wird eine einfache und kostengünstige Anbringung wenigstens eines Krümmungssensors an dem Manipulator ermöglicht. Mit Hilfe des Krümmungssensors kann beispielsweise eine lokale Krümmung des Manipulators zwischen zwei Koppelplatten oder eine globale Krümmung des Manipulators über seine gesamte Länge oder über einen Teil seiner Länge ermittelt werden. Vorzugsweise ist das Führungsmittel für die Aufnahme einer Sensorkomponente zur Längenmessung, beispielsweise eines Dehnmeßstreifens, eines Linearpotentiometers, einer Magnetspulenanordnung oder eines Seilzugs, der mit einer Längenmesseinrichtung gekoppelt ist, vorgesehen.

Vorteilhaft ist es, wenn die Koppelplatte eine zwischen den Fluidkammern angeordnete Ausnehmung aufweist, die vorzugsweise zur Durchführung von Versorgungsleitungen längs der Erstreckungskurve ausgebildet ist. Die Ausnehmung ermöglicht die Anordnung von Versorgungsleitungen, insbesondere von fluidischen und/oder elektrischen Versorgungsleitungen nahe der neutralen Faser des Manipulators. Die neutrale Faser ist diejenige Erstreckungskurve des Manipulators, die bei einer Krümmung des Manipulators keine Längenänderung erfährt. Durch eine Anordnung der Versorgungsleitungen nahe der neutralen Faser finden bei einer Krümmung des Manipulators nur geringe Relativbewegungen zwischen den Versorgungsleitungen und den die Ausnehmung begrenzenden Koppelplatten statt, was sich vorteilhaft auf den Bewegungswiderstand für den Manipulator und auf den Verschleiß der Versorgungsleitungen auswirkt.

Vorzugsweise ist der wenigstens eine elastisch deformierbare, zwischen benachbarten Koppelplatten ausgebildete Wandbereich der Fluidkammer faltenbalgartig, vorzugsweise rotationssymmetrisch, insbesondere mit Doppel-S-Kontur, ausgebildet. Hierdurch kann ein vorteilhaftes Verhältnis zwischen einer minimalen und einer maximalen Ausdehnung der jeweiligen Fluidkammern, insbesondere in einer Längsausdehnungsrichtung, erzielt werden. Der elastisch deformierbare Wandbereich der Fluidkammer weist bei einer minimalen Ausdehnung, die beispielsweise auch als Neutralstellung dienen kann, benachbarte Teilabschnitte auch, deren Flächennormalen einen vorzugsweise spitzen Winkel einschließen. Bei einer Volumenänderung der Fluidkammer, bei der es ausgehend von der minimalen Ausdehnung zu einer Längenänderung der Fluidkammer kommt, werden die benachbarten Teilabschnitte des elastisch deformierbaren Wandbereichs relativ zueinander verkippt. Bei Erreichen der maximalen Ausdehnung sind die Flächennormalen der benachbarten Teilabschnitte zumindest nahezu parallel ausgerichtet.

Bei einer Weiterbildung der Erfindung ist vorgesehen, dass die Fluidkammer derart ausgebildet ist, dass sie für parallel zur Erstreckungskurve ausgerichtete Kräfte einen linearen Deformationswiderstand aufweist, der erheblich geringer als ein linearer Deformationswiderstand für quer zur Erstreckungskurve ausgerichtete Kräfte ist. Dies wird durch eine geeignete Materialauswahl und geometrische Dimensionierung, insbesondere der elastisch deformierbaren Wandbereiche der Fluidkammern, erreicht. Vorzugsweise ist die Fluidkammer derart ausgebildet, dass ihre größte Gestaltänderung bei Druckbeaufschlagung parallel zur Erstreckungskurve ausgerichtet ist und dass der lineare Deformationswiderstand in Richtung der Erstreckungskurve einen Bruchteil, vorzugsweise weniger als 50 Prozent, insbesondere weniger als 20 Prozent, eines linearen Deformationswiderstands quer zur Erstreckungskurve beträgt. Dadurch ist gewährleistet, dass der Manipulator eine hohe Torsionsfestigkeit für Drehmomente um die Erstreckungskurve aufweist. Derartige Drehmomente führen zu Schubbelastungen auf die Fluidkammern. Diese Schubbelastungen rufen jedoch aufgrund des in Belastungsrichtung hohen linearen Deformationswiderstands der Fluidkammer nur geringe Deformationen der Fluidkammer hervor.

Bei einer Weiterbildung der Erfindung ist vorgesehen, dass mehrere Manipulatorsegmente zu einem Manipulatorabschnitt verbunden sind, der an wenigstens einem Endbereich eine Kupplung aufweist, die für eine Anbringung an einer korrespondierend ausgeführten Kupplung eines weiteren Manipulatorabschnitts ausgebildet ist. Vorzugsweise wird der Manipulator aus wenigstens zwei Manipulatorabschnitten gebildet, die jeweils unabhängig voneinander fluidisch beaufschlagbar sind. Somit kann beispielsweise eine S-förmige Krümmung des Manipulators eingestellt werden.

Bevorzugt weisen benachbart angeordnete Manipulatorabschnitte jeweils wenigstens zwei getrennt ansteuerbare Fluidkammern auf. Hierdurch kann eine Auslenkung der jeweiligen Manipulatorabschnitte in jeweils wenigstens einer Bewegungsebene, vorzugsweise in zwei, insbesondere senkrecht zueinander ausgerichteten, Bewegungsebenen erreicht werden. Besonders bevorzugt sind für wenigstens einen Manipulatorabschnitt drei, insbesondere in einer gleichmäßigen Winkelteilung angeordnete, Fluidkammern vorgesehen, die getrennt ansteuerbar sind und die eine Auslenkung eines Endbereichs des Manipulatorabschnitts in einem kugelförmigen Bewegungsraum ermöglichen.

Zweckmäßig ist es, wenn den fluidisch miteinander gekoppelten Fluidkammern jeweils wenigstens eine Ventileinrichtung zugeordnet ist. Vorzugsweise ist die Ventileinrichtung abseits der Manipulatorabschnitte angeordnet und steht über wenigstens eine Fluidleitung, die beispielsweise als separater Schlauch oder als in die Fluidkammern und Koppelplatten integrierter Kanal ausgebildet sein kann, in kommunizierender Verbindung mit der jeweiligen Fluidkammer.

Bei einer Weiterbildung der Erfindung ist vorgesehen, dass die Ventileinrichtungen elektrisch mit einer Steuereinrichtung gekoppelt sind, die für eine Ansteuerung der Ventileinrichtungen ausgebildet ist und die mittels wenigstens eines Krümmungssensors, der wenigstens einem Manipulatorabschnitt zugeordnet ist, für eine Lageregelung eines Endbereichs des Manipulatorabschnitts eingerichtet ist. Die Steuereinrichtung ermöglicht über die Kopplung mit den Ventileinrichtungen eine gezielte Deformation des wenigstens eines Manipulatorabschnitts durch selektive Druckbeaufschlagung der Fluidkammern, die mittels der Ventileinrichtungen durchgeführt wird. Um eine möglichst exakte Positionierung des distalen Endbereichs des Manipulators an einem vorgebbaren Ort im dreidimensionalen Raum zu ermöglichen, ist eine Lageregelung für den Endbereich vorgesehen, bei der die Steuereinrichtung Gebrauch von Krümmungssignalen macht, die von dem wenigstens einen Krümmungssensor bereitgestellt werden. Vorzugsweise erfolgt eine Kommunikation zwischen den Ventileinrichtungen und der Steuereinrichtung drahtlos, beispielsweise über eine Funkverbindung.

Eine vorteilhafte Ausführungsform der Erfindung ist in der Zeichnung dargestellt. Hierbei zeigt:
- Figur 1: eine schematische Darstellung eines aus drei Manipulatorabschnitten aufgebauten Manipulators in einer Funktionsstellung,
- Figur 2: eine perspektivische Darstellung eines Manipulatorabschnitts, der aus einer Vielzahl von einstückig aneinander gereihten Manipulatorsegmenten aufgebaut ist,
- Figur 3: eine Schnittdarstellung des Manipulatorabschnitts gemäß der Figur 2 und
- Figur 4: eine geschnittene Detaildarstellung einer Kupplung zur Verbindung von aneinandergrenzenden Manipulatorabschnitten.

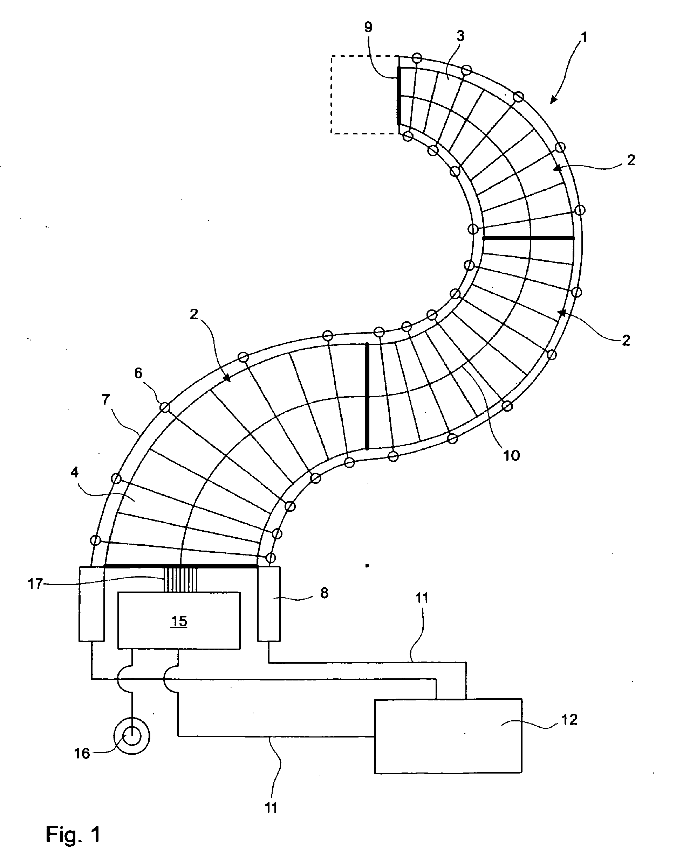

Ein in der Figur 1 dargestellter Manipulator 1 ist rüsselförmig oder wurmartig ausgebildet und ist exemplarisch aus drei in Reihe angeordneten Manipulatorabschnitten 2 aufgebaut. Der Manipulator 1 dient zur Positionierung eines an einem distalen Endbereich 3 anbringbaren, nicht dargestellten Werkzeughalters, Werkstückträgers oder Werkzeugs. Jeder der Manipulatorabschnitte 2 kann durch Beaufschlagung von nachstehend näher erläuterten Fluidkammern um zwei senkrecht zueinander ausgerichtete Bewegungsachsen gekrümmt werden. Zudem ist bei geeigneter Ansteuerung eine Verlängerung oder Verkürzung des jeweiligen Manipulatorabschnitts 2 in einer axialen Erstreckungsrichtung möglich. Somit ermöglicht jeder der Manipulatorabschnitte 2 eine Bewegung des jeweiligen distalen Endbereichs in einem von zwei konzentrisch zueinander ausgerichteten Kugelschalenabschnitten begrenzten Bewegungsraum. Durch die Kopplung von drei Manipulatorabschnitten 2 bei der vorliegenden Ausführungsform des Manipulators 1 können Orte im dreidimensionalen Raum mit voneinander unterschiedlichen Orientierungen des distalen Endbereichs 3 des Manipulators 1 angesteuert werden, wodurch ein flexibler Einsatz des Manipulators 1 für unterschiedliche Handhabungsaufgaben gewährleistet wird.

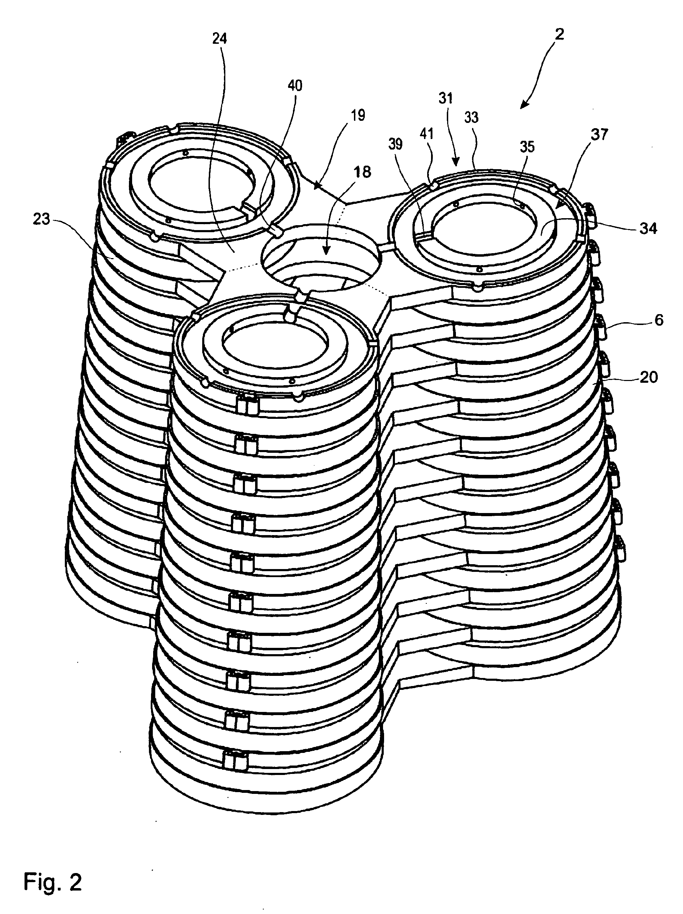

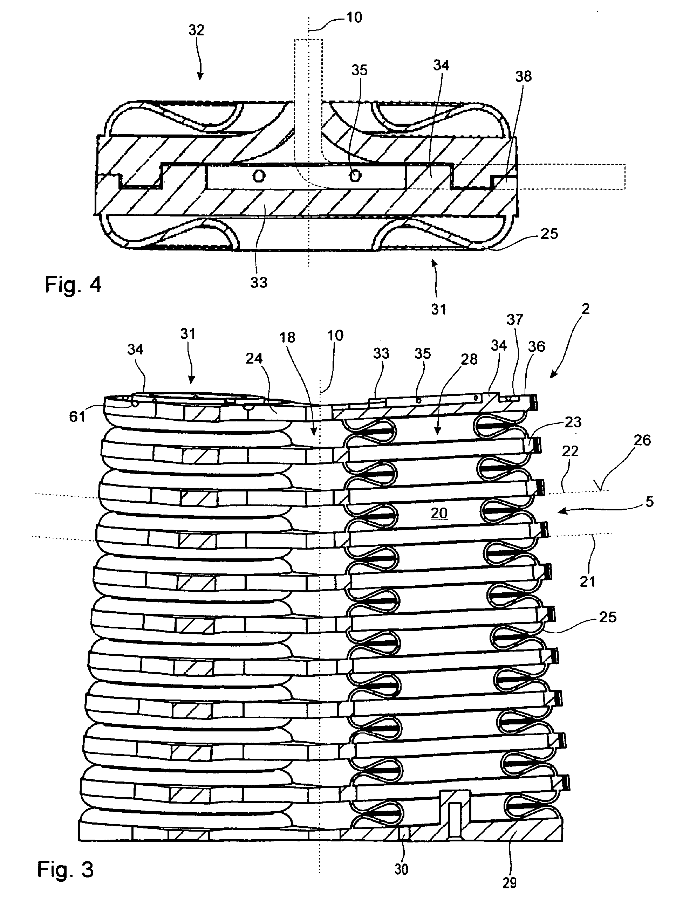

Wie in der Figur 1 nur schematisch angedeutet ist und nachstehend zu den Figuren 2 und 3 näher erläutert wird, ist jeder der Manipulatorabschnitte 2 aus einer Vielzahl von aneinander gereihten und einstückig miteinander verbundenen Manipulatorsegmenten 5 aufgebaut. An radial außenliegenden Oberflächenbereichen der Manipulatorsegmente 5 sind jeweils exemplarisch als Führungsösen ausgebildete Führungsmittel 6, insbesondere einstückig, ausgebildet. Die Führungsmittel 6 dienen zur Führung von Sensorkomponenten 7, die exemplarisch als Seilzüge ausgebildet sind. Die Sensorkomponenten 7 sind mit endseitig am proximalen Endbereich 4 des Manipulators 1 angeordneten Krümmungssensoren 8 gekoppelt und an einer Kupplungsplatte 9 des distalen Endbereichs 3 festgelegt.

Die Krümmungssensoren 8 sind vorzugsweise als Wegmeßsensoren ausgebildet und ermitteln die krümmungsbedingte Relativbewegung der jeweiligen Sensorkomponente 7 bei der Bewegung des Manipulators 1, um daraus eine Positionsinformation zu erzeugen. Bei der dargestellten Ausführungsform des Manipulators 1 sind zwei Krümmungssensoren 8 vorgesehen, die vorzugsweise in gleicher Winkelteilung und gleicher radialer Beabstandung zu einer Erstreckungskurve 10 angeordnet sind. Die Erstreckungskurve 10 stimmt vorzugsweise mit einer neutralen Faser des Manipulators 1 überein, bei der es sich um eine räumliche Linie im inneren des Manipulators 1 handelt, die bei einer Krümmung der Manipulatorabschnitte 2 keine Längenänderung erfährt. Die Gestalt der neutralen Faser und der Erstreckungskurve 10 ändern sich mit der Krümmung der Manipulatorabschnitte 2. In einer nicht dargestellten Neutrallage des Manipulators 1, in der sämtliche Manipulatorabschnitte 2 in einer ungekrümmten Stellung vorliegen, verlaufen die neutrale Faser und die Erstreckungskurve 10 längs einer Geraden.

Die Krümmungssensoren 8 sind über Verbindungsleitungen 11 elektrisch mit einer Steuereinrichtung 12 verbunden, die die Längeninformationen der Krümmungssensoren 8 verarbeitet. Aus den Längeninformationen wird von der Steuereinrichtung 12 eine Positionsinformation bezüglich der Lage des distalen Endbereichs 3 im dreidimensionalen Raum und bezüglich der Ausrichtung des distalen Endbereichs 3 bezogen auf seine räumliche Lage ermittelt. Diese Lageinformation kann von der Steuereinrichtung 12 mit Druckwerten verglichen werden, die von nicht näher dargestellten Drucksensoren bereitgestellt werden, die den Fluidkammern der jeweiligen Manipulatorabschnitte 2 zugeordnet sind und die die Ermittlung einer Ausrichtungsinformation durch die Steuereinrichtung ermöglichen.

Aus dem Abgleich der Ausrichtungsinformation, die einer Grobbestimmung der jeweiligen Krümmung des zugeordneten Manipulatorabschnitts 2 entspricht, mit der Positionsinformation kann eine Plausibilitätsprüfung vorgenommen werden. Dadurch kann die von der Steuereinrichtung ermittelte Positionsinformation abgesichert werden und als zuverlässige Grundlage für eine Bahnplanung des Manipulators 1 herangezogen werden, um beispielsweise den distalen Endbereich aus einer vorliegenden Position in eine neue Position zu bewegen. Hierzu bedient sich die Steuereinrichtung 12 mehrerer Ventileinrichtungen 15, die über Verbindungsleitungen elektrisch mit der Steuereinrichtung 12 verbunden sind und die für die Blockierung oder Freigabe eines druckbeaufschlagten Fluids, insbesondere Druckluft an die nachstehend näher beschriebenen Fluidkammern der Manipulatorabschnitte 2 ausgebildet sind.

Jede der Ventileinrichtungen 15 ist eingangsseitig mit einer Druckluftquelle 16 gekoppelt und ist ausgangsseitig mit einem Druckluftschlauch 17 verbunden. Exemplarisch ist vorgesehen, dass die Druckluftschläuche 17 durch eine in der Figur 2 erkennbare zentrale Ausnehmung 18 bis zu der jeweiligen Fluidkammer geführt sind. Durch die Anordnung der Fluidschläuche 17 nahe der neutralen Faser des Manipulators ist auch bei starker Krümmung der Manipulatorabschnitte 2 keine oder nur eine geringfügige Nachführung der Fluidschläuche 17 erforderlich, um eventuelle Längenänderungen des Manipulators 1 auszugleichen.

Aus den Figuren 1 bis 3 ist erkennbar, dass der Manipulator 1 längs der Erstreckungskurve 10 verjüngt ausgebildet ist. Dadurch wird eine Gewichtsoptimierung für den Manipulator 1 erreicht, da am distalen Endbereich 3 in erster Linie die Kraftrückwirkungen des nicht dargestellten Werkzeugs oder Werkstücks aufgenommen werden müssen, während am proximalen Endbereich 4 zusätzlich die durch die Gewichtskraft des distalen Endebereichs 3 hervorgerufenen Kräfte aufgenommen werden müssen.

Wie aus den Figuren 2 und 3 hervorgeht, ist der dargestellte Manipulatorabschnitt 2 einstückig aus mehreren längs der Erstreckungskurve 10 aneinander gereihten Manipulatorsegmenten 5 aufgebaut. In der Neutralstellung des exemplarischen Manipulatorabschnitts 2, wie sie in den Figuren 2 und 3 gezeigt ist, verläuft die Erstreckungskurve 10 längs einer Geraden. Bei einer nicht dargestellten Ausführungsform eines Manipulatorabschnitts kann die Erstreckungskurve in der Neutralstellung in einer oder zwei Raumrichtungen gekrümmt ausgebildet sein.

Für die nachfolgende Erläuterung des Aufbaus des Manipulatorabschnitts 2 wird angenommen, dass die Manipulatorsegmente 5 jeweils eine Koppelplatte 19 und drei darauf angebrachte Fluidkammern 20 umfassen. Die Grenzen des hierdurch bestimmten Manipulatorsegments 5 sind in der Figur 3 durch die gestrichelten Linien 21 und 22 angedeutet. Hierbei handelt es sich jedoch nur um eine von mehreren möglichen Abgrenzungen für die Manipulatorsegmente 5. Die Koppelplatte 19 ist bei der dargestellten Ausführungsform des Manipulatorabschnitts 2 im Wesentlichen durch drei, vorliegend kreisringförmig ausgebildete, Stützringe 23 und die Stützringe 23 verbindende Stege 24 bestimmt. Die Stege 24 begrenzen in einem radial innenliegenden Bereich die zentrale Ausnehmung 18, durch die beispielsweise die in der Figur 1 schematisch angedeuteten Druckluftschläuche 17 nahe der neutralen Faser geführt werden können. Die Stützringe 23 und die Stege 24 sind derart dimensioniert, dass sie bei einem bestimmungsgemäßen Gebrauch des Manipulators 1 durch die dabei auftretenden Kräfte nicht oder nur in sehr geringem Maße deformiert werden, um stets eine eindeutig vorhersagbare Gestalt des Manipulators 1 gewährleisten zu können. Vorliegend sind die Stützringe 23 und die Stege 24 aus massivem Material hergestellt. Die den einstückig angeformten Fluidkammern 20 zugewandten Oberflächen der Stützringe 23 und Stege 24 bilden eine Haupterstreckungsfläche 26, deren Flächennormale parallel zur Erstreckungskurve 10 ausgerichtet ist.

In Abhängigkeit von dem generativen Fertigungsverfahren für den Manipulatorabschnitt 2, insbesondere bei dem selektiven Lasersintern, können die Stützringe 23 und/oder die Stege 24 auch bereichsweise Aussparungen, beispielsweise in der Art einer Wabenstruktur, aufweisen, um eine raschere Herstellung und ein geringeres Gewicht bei im Wesentlichen gleicher Stabilität gewährleisten zu können.

Wie aus der Schnittdarstellung der Figur 3 hervorgeht, weisen die auf der Koppelplatte 19 einstückig angeordneten Fluidkammern 20 eine erheblich geringere Wandstärke als die Stützringe 23 und die Stege 24 auf. Exemplarisch sind die Fluidkammern 20 über ihre gesamte Erstreckung mit einer konstanten Wandstärke ausgeführt und weisen somit einen durchgehend elastisch deformierbaren Wandbereich 25 auf. Exemplarisch ist der Wandbereich 25 in der Art eines Faltenbalgs rotationssymmetrisch mit Doppel-S-förmiger Kontur in der dargestellten Neutralstellung ausgeführt. Hierdurch kann bei einer Beaufschlagung der Fluidkammer 20 mit einem druckbeaufschlagten Fluid, insbesondere Druckluft, eine große Volumenänderung der Fluidkammer 20 erzielt werden. Bei der Volumenänderung findet eine elastische Deformation des Wandbereichs 25 statt, die zu einer Längenänderung der jeweiligen Fluidkammer 20 führt. Aufgrund der kinematischen Kopplung der exemplarisch drei Fluidkammern 20 jedes Manipulatorsegments 5 mittels der Koppelplatte 19 kann eine Verkippung der Koppelplatte 19 des an die Endbereiche der Fluidkammern 20 angrenzenden Manipulatorsegments 5 oder eine lineare Bewegung der Koppelplatte 19 erreicht werden. Bei einer Beaufschlagung einer oder zweier Fluidkammern 20 mit einheitlichem Druck erfahren diese eine Längenänderung, während die verbleibenden zwei Fluidkammern 20 oder die verbleibende Fluidkammer 20 aufgrund der Elastizitätseigenschaften des Wandbereichs 25 zumindest nahezu keine Längenänderung erfährt. Hierdurch wird die Koppelplatte 19 gegenüber benachbarten Koppelplatten 19 verkippt. Sofern alle drei Fluidkammern 20 mit dem gleichen Fluiddruck beaufschlagt werden, erfahren auch alle drei Fluidkammern 20 eine gleichartige Längenänderung, so dass eine lineare Relativbewegung benachbarter Koppelplatten 19 hervorgerufen wird.

Bei der vorliegenden Ausführungsform des Manipulatorabschnitts 2 sind die in Reihe längs der Erstreckungskurve 10 angeordneten Fluidkammern 20 der benachbarten Manipulatorsegmente 5 kommunizierend miteinander verbunden, so dass sie eine gemeinsame Druckkammer 28 bilden. Bei einer nicht dargestellten Ausführungsform eines Manipulatorabschnitts sind die beispielsweise drei Fluidkammern eines Manipulatorsegments jeweils fluidisch getrennt ausgebildet und separat von Fluidkammern benachbarter Manipulatorsegmente fluidisch beaufschlagbar.

Der in den Figuren 2 und 3 dargestellte Manipulatorabschnitt 2 bildet bei dem in Figur 1 dargestellten Manipulator 1 das proximale Ende und weist zu diesem Zweck eine Ankerplatte 29 auf, die in der Art eines Manipulatorsegments 5 ausgebildet ist und ebenfalls drei Fluidkammern 20 trägt. An einer nach außen gewandten Stirnseite ist die Ankerplatte 29 für eine Befestigung an einer nicht dargestellten Ankerfläche ausgebildet. Bei der Ankerfläche kann es sich beispielsweise um einen Endabschnitt eines Industrieroboters oder um ein starres Maschinengestell oder um eine Oberfläche eines Fahrzeugs handeln. In der Ankerplatte 29 ist für jede der Druckkammern 28 ein vorliegend als Bohrung ausgeführter Fluidanschluss 30 ausgebildet, an den ein nicht dargestellter Druckluftschlauch 17 angeschlossen werden kann.

An einem der Ankerplatte 29 entgegengesetzten Endbereich des in den Figuren 2 und 3 dargestellten Manipulatorabschnitts 2 ist eine erste Kupplung 31 ausgebildet, die für eine Kopplung an eine in der Figur 4 ausschnittsweise dargestellte zweite Kupplung 32 vorgesehen ist. Die erste Kupplung 31 weist eine ähnliche Kontur wie die Koppelplatte 19 auf, wobei anstelle von Stützringen 23 Abdeckscheiben 33 vorgesehen sind, die jeweils die angrenzende Fluidkammer 20 abdichtend abschließen. An einer nach außen gewandten Oberseite der ersten Kupplung 31 sind jeweils Koppelringe 34 ausgebildet. Die Koppelringe 34 sind exemplarisch konzentrisch zu den Fluidkammern 20 angeordnet und weisen vorliegend jeweils vier in radialer Richtung verlaufende und beispielhaft in gleicher Winkelteilung angeordnete Gewindebohrungen 35 auf. Die Koppelringe 34 begrenzen mit einem vorliegend konzentrisch zu der jeweiligen Fluidkammer 20 ausgebildeten, radial außenliegenden, umlaufenden Zentrierbund 36 eine Aufnahmenut 37.

Die zweite Kupplung 32 des nicht dargestellten Manipulatorsegments, das zur Ankopplung an das in Figur 2 und 3 dargestellte Manipulatorsegment 2 vorgesehen ist, umfasst einen Zentrierring 38, der zur Aufnahme in der Aufnahmenut 37 vorgesehen ist, wie dies in der Schnittdarstellung gemäß der Figur 4 gezeigt ist. Der Zentrierring 38 weist nicht dargestellte, koaxial zu den Gewindebohrungen 35 angeordnete Durchgangsbohrungen auf, die eine Verschraubung der beiden Kupplungen 31 und 32 ermöglichen. Um einen Zugang zu den Schraubenköpfen der nicht dargestellten Schrauben, die für die Verbindung der Kupplungen 31, 32 eingesetzt werden, zu ermöglichen, sind am Zentrierbund 36 und in gleicher Weise an einer nicht dargestellten Stirnfläche der zweiten Kupplung 32 jeweils halbzylindrische Ausnehmungen 39 vorgesehen. An der ersten Kupplung ist ein den Zentrierbund 36 und den Koppelring 34 durchsetzender, halbzylindrischer Schlauchkanal 40 ausgebildet, der entsprechend auch, in nicht dargestellter Weise, in der zweiten Kupplung 32 vorgesehen ist. Der Schlauchkanal 40 ermöglicht die Zuführung eines in Figur 4 gestrichelt angedeuteten Druckluftschlauchs durch eine Zugangsbohrung 41 der zweiten Kupplung 32 in die Druckkammer 28 des Manipulatorsegments 2. Dabei wird der Druckluftschlauch 17 durch die Zwangskrümmung zwischen dem Schlauchkanal 40 und der Zugangsbohrung 41 sicher arretiert.

## Patentansprüche

1. Fluidisch betreibbarer Manipulator aus mehreren längs einer Erstreckungskurve (10) gestapelt angeordneten Manipulatorsegmenten (5), die jeweils wenigstens eine Koppelplatte (19) und wenigstens zwei, quer zur Erstreckungskurve (10) beabstandet an der Koppelplatte (19) angeordnete, fluidisch getrennt ausgebildete Fluidkammern (20) umfassen, wobei jede der Fluidkammern (20) wenigstens einen elastisch deformierbaren Wandbereich (25) aufweist, der dazu ausgebildet ist, bei Beaufschlagung der jeweiligen Fluidkammer (20) mit einem Fluid eine Volumenänderung der Fluidkammer (20) für eine Linearbewegung im Wesentlichen parallel zur Erstreckungskurve (10) zu ermöglichen und wobei eine Haupterstreckungsfläche (26) der Koppelplatte (19) für eine Anordnung zumindest im Wesentlichen senkrecht zur Erstreckungskurve (10) vorgesehen ist, wobei die wenigstens zwei Fluidkammern (20) einstückig mit der wenigstens einen Koppelplatte (19) ausgebildet sind, **dadurch gekennzeichnet, dass** die Manipulatorsegmente (5) mit einem generativen Herstellungsverfahren hergestellt sind und dass von den Fluidkammern (20) und der Koppelplatte (19) bestimmte Querschnitte der Manipulatorsegmente (5) in jeweils senkrecht zur Erstreckungskurve (10) ausgerichteten Querschnittsebenen längs der Erstreckungskurve (10) verjüngt ausgebildet sind.

2. Manipulator nach Anspruch 1, **dadurch gekennzeichnet, dass**, vorzugsweise elastisch deformierbare, Wandbereiche (25) der Fluidkammern (20) für eine, insbesondere einstückige, Verbindung benachbart angeordneter Koppelplatten (19) ausgebildet sind.

3. Manipulator nach Anspruch 1 oder 2, **dadurch gekennzeichnet, dass** längs der Erstreckungskurve (10) angeordnete Fluidkammern (20) benachbarter Manipulatorsegmente (5) kommunizierend miteinander verbunden sind.

4. Manipulator nach Anspruch 1 oder 2, **dadurch gekennzeichnet, dass** längs der Erstreckungskurve (10) angeordnete Fluidkammern (20) benachbarter Manipulatorsegmente (5) fluidisch getrennt und separat ansteuerbar ausgebildet sind.

5. Manipulator nach einem der vorhergehenden Ansprüche, **dadurch gekennzeichnet, dass** an einer radial außenliegenden Oberfläche der Koppelplatte (19) wenigstens ein Führungsmittel (6) zur Aufnahme einer Sensorkomponente (7) eines Krümmungssensors (8) ausgebildet ist.

6. Manipulator nach einem der vorhergehenden Ansprüche, **dadurch gekennzeichnet, dass** die Koppelplatte (19) eine zwischen den Fluidkammern (20) angeordnete Ausnehmung (18) aufweist, die vorzugsweise zur Durchführung von Versorgungsleitungen (17) längs der Erstreckungskurve (17) ausgebildet ist.

7. Manipulator nach einem der vorhergehenden Ansprüche, **dadurch gekennzeichnet, dass** der wenigstens eine elastisch deformierbare, zwischen benachbarten Koppelplatten (19) ausgebildete Wandbereich (25) der Fluidkammer (20) faltenbalgartig, vorzugsweise rotationssymmetrisch, insbesondere mit Doppel-S-Kontur, ausgebildet ist.

8. Manipulator nach einem der vorhergehenden Ansprüche, **dadurch gekennzeichnet, dass** die Fluidkammer (20) derart ausgebildet ist, dass sie für parallel zur Erstreckungskurve (10) ausgerichtete Kräfte einen linearen Deformationswiderstand aufweist, der erheblich geringer als ein linearer Deformationswiderstand für quer zur Erstreckungskurve (10) ausgerichtete Kräfte ist.

9. Manipulator nach einem der vorhergehenden Ansprüche, **dadurch gekennzeichnet, dass** mehrere Manipulatorsegmente (5) zu einem Manipulatorabschnitt (2) verbunden sind, der an wenigstens einem Endbereich (3) eine Kupplung (31) aufweist, die für eine Anbringung an einer korrespondierend ausgeführten Kupplung (32) eines weiteren Manipulatorabschnitts (2) ausgebildet ist.

10. Manipulator nach Anspruch 8, **dadurch gekennzeichnet, dass** benachbart angeordnete Manipulatorabschnitte (2) jeweils wenigstens zwei getrennt ansteuerbare Fluidkammern (20) aufweisen.

11. Manipulator nach einem der vorhergehenden Ansprüche, **dadurch gekennzeichnet, dass** den fluidisch miteinander gekoppelten Fluidkammern (20) jeweils wenigstens eine Ventileinrichtung (15) zugeordnet ist.

12. Manipulator nach Anspruch 11, **dadurch gekennzeichnet, dass** die Ventileinrichtungen (15) elektrisch mit einer Steuereinrichtung (12) gekoppelt sind, die für eine Ansteuerung der Ventileinrichtungen (15) ausgebildet ist und die mittels wenigstens eines Krümmungssensors (8), der wenigstens einem Manipulatorabschnitt (2) zugeordnet ist, für eine Lageregelung eines Endbereichs des Manipulatorabschnitts eingerichtet ist.

## Claims

1. Fluidically operable manipulator of several manipulator segments (5) arranged stacked along an extension curve (10), each comprising at least one coupling plate (19) and at least two fluidically separated fluid chambers (20) spaced apart on the coupling plate (19) at right-angles to the extension curve (10), wherein each of the fluid chambers (20) has at least one elastically deformable wall area (25) which is designed, on pressurisation of the respective fluid chamber (20) with a fluid, to allow a change in volume of the fluid chamber (20) for a linear movement substantially parallel to the extension curve (10), and wherein a main extension surface (26) of the coupling plate (19) is provided for an arrangement at least substantially at right-angles to the extension curve (10), wherein the two or more fluid chambers (20) are designed in one piece with the coupling plate or plates (19), **characterised in that** the manipulator segments (5) are made by a generative production process and that by the fluid chambers (20) and the coupling plate (19) certain cross-sections of the manipulator segments (5) are tapered along the extension curve (10) in cross-sectional planes aligned in each case at right-angles to the extension curve (10).

2. Manipulator according to claim 1, **characterised in that** preferably elastically deformable wall areas (25) of the fluid chambers (20) are designed for the connection, in particular in one piece, of adjacent coupling plates (19).

3. Manipulator according to claim 1 or 2, **characterised in that** fluid chambers (20) of adjacent manipulator segments (5) arranged along the extension curve (10) are connected so as to communicate with one another.

4. Manipulator according to claim 1 or 2, **characterised in that** fluid chambers (20) of adjacent manipulator segments (5) arranged along the extension curve (10) are fluidically separated and separately controlled.

5. Manipulator according to any of the preceding claims **characterised in that**, on a radially outer surface of the coupling plate (19), at least one guide means (6) is formed to accommodate a sensor component (7) of a curvature sensor (8).

6. Manipulator according to any of the preceding claims, **characterised in that** the coupling plate (19) has a recess (18) located between the fluid chambers (20), which is preferably designed for the running of supply lines (17) along the extension curve (17).

7. Manipulator according to any of the preceding claims, **characterised in that** the one or more elastically deformable wall sections (25) of the fluid chambers (20) between adjacent connecting plates (19) is or are bellows-like, preferably rotation-symmetrical, in particular with a double-S contour.

8. Manipulator according to any of the preceding claims, **characterised in that** the fluid chamber (20) is so designed that, for forces aligned parallel to the extension curve (10), it has a linear resistance to deformation which is considerably less than a linear resistance to deformation for forces aligned at right-angles to the extension curve (10).

9. Manipulator according to any of the preceding claims, **characterised in that** several manipulator segments (5) are combined to form a manipulator section (2) which has on at least one end section (3) a coupling (31) designed for the attachment of a corresponding coupling (32) of another manipulator section (2).

10. Manipulator according to claim 8, **characterised in that** adjacent manipulator sections (2) preferably have in each case at least two separately controllable fluid chambers (20).

11. Manipulator according to any of the preceding claims, **characterised in that** the fluidically connected fluid chambers (20) are assigned at least one valve device (15).

12. Manipulator according to claim 11, **characterised in that** the valve devices (15) are linked electrically to a control unit (12), which is designed to control the valve devices (15) and, by means of at least one curvature sensor (8) assigned to at least one manipulator section (2), is set up for position control of an end section of the manipulator section.

## Revendications

1. Manipulateur pouvant fonctionner de manière fluidique, composé de plusieurs segments de manipulateur (5) disposés par pile le long d'une courbe d'étendue (10), qui comportent respectivement au moins une plaque de couplage (19) et au moins deux chambres fluidiques (20) réalisées séparément fluidiquement, disposées transversalement à la courbe d'étendue (10) à distance sur la plaque de couplage (19), chacune des chambres fluidiques (20) présentant au moins une zone de paroi (25) déformable élastiquement qui est réalisée afin de permettre lors de l'alimentation de la chambre fluidique respective (20) en un fluide une modification de volume de la chambre fluidique (20) pour un mouvement linéaire sensiblement parallèle à la courbe d'étendue (10) et une surface d'étendue principale (26) de la plaque de couplage (19) étant prévue pour un agencement au moins sensiblement perpendiculaire à la courbe d'étendue (10), les au moins deux chambres fluidiques (20) étant réalisées d'un seul tenant avec l'au moins une plaque de couplage (19), **caractérisé en ce que** les segments de manipulateur (5) sont fabriqués dans un procédé de fabrication génératif et **en ce que** des sections transversales déterminées par les chambres fluidiques (20) et la plaque de couplage (19) des segments de manipulateur (5) sont réalisées rétrécies le long de la courbe d'étendue (10) dans des plans de section transversale orientés respectivement perpendiculairement à cette courbe d'étendue (10).

2. Manipulateur selon la revendication 1, **caractérisé en ce que** des zones de paroi (25), de préférence déformables élastiquement, des chambres fluidiques (20) sont réalisées pour une liaison, en particulier en une seule partie, de plaques de couplage (19) disposées de manière contigüe.

3. Manipulateur selon la revendication 1 ou 2, **caractérisé en ce que** des chambres fluidiques (20) disposées le long de la courbe d'étendue (10) de segments de manipulateur contigus (5) sont reliées de manière à communiquer entre elles.

4. Manipulateur selon la revendication 1 ou 2, **caractérisé en ce que** des chambres fluidiques (20) disposées le long de la courbe d'étendue (10) de segments de manipulateur (5) contigus sont réalisées de manière séparée fluidiquement et de manière à pouvoir être commandée séparément.

5. Manipulateur selon l'une quelconque des revendications précédentes, **caractérisé en ce qu'**au moins un moyen de guidage (6) pour la réception d'un composant (7) d'un capteur de courbure (8) est réalisé sur une surface radialement extérieure de la plaque de couplage (19).

6. Manipulateur selon l'une quelconque des revendications précédentes, **caractérisé en ce que** la plaque de couplage (19) présente un évidement (18) disposé entre les chambres fluidiques (20) qui est réalisé de préférence pour le passage de conduites d'alimentation (17) le long de la courbe d'étendue (17).

7. Manipulateur selon l'une quelconque des revendications précédentes, **caractérisé en ce que** l'au moins une zone de paroi (25) réalisée entre des plaques de couplage (19) contiguës, déformable élastiquement de la chambre fluidique (20) est réalisée comme un soufflet, présente de préférence une symétrie de rotation, en particulier un contour en double S.

8. Manipulateur selon l'une quelconque des revendications précédentes, **caractérisé en ce que** la chambre fluidique (20) est réalisée de manière à présenter, pour des forces orientées parallèlement à la courbe d'étendue (10), une résistance à la déformation linéaire qui est considérablement inférieure à une résistance à la déformation linéaire pour des forces orientées transversalement à la courbe d'étendue (10).

9. Manipulateur selon l'une quelconque des revendications précédentes, **caractérisé en ce que** plusieurs segments (5) sont reliés en une section de manipulateur (2) qui présente sur au moins une zone d'extrémité (3) un couplage (31) réalisé pour un montage sur un couplage (32) réalisé de manière correspondante d'une autre section de manipulateur (2).

10. Manipulateur selon la revendication 8, **caractérisé en ce que** des sections de manipulateur (2) disposées de manière contigüe présentent respectivement au moins deux chambres fluidiques (20) pouvant être commandées séparément.

11. Manipulateur selon l'une quelconque des revendications précédentes, **caractérisé en ce que** respectivement au moins un dispositif de distribution (15) est associé aux chambres fluidiques (20) couplées fluidiquement entre elles.

12. Manipulateur selon la revendication 11, **caractérisé en ce que** les dispositifs de distribution (15) sont couplés électriquement à un dispositif de commande (12) qui est réalisé pour une commande des dispositifs de distribution (15) et qui est aménagé à l'aide d'au moins un capteur de courbure (8) associé à au moins une section de manipulateur (2), pour une régulation de la position d'une zone d'extrémité de la section de manipulateur.
